# EUROPÄISCHE PATENTSCHRIFT

(11) **EP 0 709 583 B1**
(45) Veröffentlichungstag und Bekanntmachung des Hinweises auf die Patenterteilung: **16.06.1999**
(21) Anmeldenummer: 95105617.5
(22) Anmeldetag: 13.04.1995
(51) Int. Cl.: F16C 19/52, G01P 3/44

(54) **Dichtungsvorrichtung**
Sealing device
Dispositif de joint d'étanchéité

(30) Priorität: 31.10.1994 DE 4438947
(43) Veröffentlichungstag der Anmeldung: 01.05.1996
(73) Patentinhaber: Firma Carl Freudenberg, 69469 Weinheim (DE)
(72) Erfinder: Dahlhaus, Ulrich, D-68535 Edingen (DE)

(56) Entgegenhaltungen:
- EP-A- 0 405 048
- EP-A- 0 565 771
- EP-A- 0 657 738
- EP-A- 0 681 185
- FR-A- 2 621 365
- US-A- 4 161 120
- US-A- 5 166 611

## Beschreibung

Die Erfindung betrifft eine Dichtungsvorrichtung gemäß dem Oberbegriff des Anspruchs 1.

Solch eine Dichtungsvorrichtung ist z.B. aus der US-A-4 161 120 bekannt, wobei der Versteifungsring des Radialwellendichtrings gleichzeitig den Sensorring bildet. Bei einer derartigen Ausgestaltung ist es von Nachteil, daß bei einem Austausch des Radialwellendichtrings der Sensorring ebenfalls ausgetauscht werden muß, obwohl dieser keinem gebrauchsdauerbedingtem Verschleiß unterliegt. Ferner ist die Trennung des Radialwellendichtrings vom Sensorring in Hinblick auf ein Recycling der beiden Teile problematisch. Als weiterer Nachteil hat sich erwiesen, daß durch das abzudichtende Bauteil in den Radialwellendichtring eingeleitete Schwingungen durch die einstückige Ausgestaltung des Versteifungsrings mit dem Sensorring unmittelbar auf diesen übertragen werden, wodurch sich Störungen bei der induktiven Erfassung der Drehbewegungen ergeben können.

Der Erfindung liegt die Aufgabe zugrunde, eine Dichtungsanordnung der eingangs genannten Art derart weiterzuentwickeln, daß die zuvor genannten Nachteile vermieden werden, daß die Dichtungsanordnung einfach montierbar ist und gute Gebrauchseigenschaften während einer langen Gebrauchsdauer aufweist. Außerdem soll eine Übertragung von Schwingungen zwischen dem Radialwellendichtring und dem Sensorring vermieden werden.

Diese Aufgabe wird erfindungsgemäß mit dem kennzeichnenden Merkmalen von Anspruch 1 gelöst. Auf vorteilhafte Ausgestaltungen nehmen die Unteransprüche Bezug.

Hierbei ist von Vorteil, daß der im Vergleich zum Sensorring verschleißanfälligere Radialwellendichtring separat erneuert werden kann, wobei derselbe Sensorring während der gesamten Gebrauchsdauer der Dichtungsanordnung erhalten bleibt. Der Sensorring ist im Bereich seines Axialvorsprungs auf die Ummantelung des Axialschenkels des Versteifungsrings aufpreßbar, wobei eine direkte Berührung des Versteifungsrings und des Sensorrings vermieden wird. Die Anordnung des Sensorrings auf der elastomeren Ummantelung bewirkt eine Schwingungsentkopplung bezogen auf den Radialwellendichtring. Die schwingungsdämpfenden Eigenschaften der Ummantelung bedingen eine Drehbewegung des Sensorrings, weitgehend frei von Vibrationen am Sensor vorbei. Meßungenauigkeiten bei der Erfassung der Drehbewegungen sind daher auf ein Minimum reduziert.

Die Ummantelung erstreckt sich bevorzugt über die gesamte axiale Länge des Axialschenkels, wobei der Sensorring bevorzugt im wesentlichen L-förmig ausgebildet ist.

Der Axialvorsprung weist bevorzugt eine geringere Ausdehnung in axialer Richtung auf als der Axialschenkel, wobei die Ummantelung die Stirnseite des Axialvorsprungs herstellungsbedingt in radialer Richtung überragt. Hierbei ist von Vorteil, daß beim Einpressen der vormontierbaren Einheit, bestehend aus Radialwellendichtring und Sensorring in die Bohrung eines Gehäuses die Ummantelung, die die Stirnseite des Axialvorsprungs überragt unter radialer Vorspannung dichtend mit dem Gehäuse in Eingriff ist. Eine sichere statische Abdichtung des abzudichtenden Raums ist dadurch gewährleistet. Der Außenumfang des Axialvorsprungs des Sensorrings, der bevorzugt aus einem metallischen Werkstoff besteht, ist auf der dem abzudichtenden Raum abgewandten Seite der radial vorspringenden Ummantelung angeordnet und berührt ebenfalls die Gehäusebohrung anliegend. Eine exakte konzentrische Zuordnung des Sensorrings zur Bohrung des Gehäuses, die sich während der gesamten Gebrauchsdauer der Dichtungsanordnung nicht verändert, ist dadurch sichergestellt. Die Ummantelung kann den Axialschenkel bevorzugt vollständig umschließen. Die Ummantelung bildet dadurch einen Korrosionsschutz für den Versteifungsring.

Der Axialschenkel kann auf der dem Radialschenkel abgewandten Seite mit einem einstückig angeformten, sich radial nach außen erstreckenden Anschlag versehen sein, wobei der Anschlag einen geringeren Außendurchmesser aufweist, als der Axialvorsprung des Sensorrings und die Ummantelung den Anschlag radial außenseitig umschließt. Durch den Anschlag werden unerwünscht große Materialanhäufungen des elastomeren Werkstoffs der Ummantelung verhindert. Der herstellungsbedingte Schwund im Anschluß an die Vulkanisation der Ummantelung wird dadurch reduziert und exaktere geometrische Abmessungen der Ummantelung bedingt. Der Sensorring wird mit seinem Axialvorsprung in Montagerichtung so lange über die umfangsseitige Ummantelung des Versteifungsrings geschoben, bis er an dem mit elastomerem Werkstoff ummantelten Anschlag zur Anlage gelangt. Unzulässig hohe elastische Verformungen der Ummantelung, die zu einer ungenauen Lage von Sensorring und Radialwellendichtring zueinander führen könnten, werden durch den kernförmigen Anschlag ausgeschlossen. Durch den Anschlag wird ebenfalls eine Verbesserung des Abdichtungsergebnisses zwischen dem Radialwellendichtring und der Bohrung bewirkt, da die Ummantelung im Bereich der Abdichtung gegenüber dem Gehäuse eine verbesserte Formbeständigkeit aufweist und Relaxationserscheinungen vernachlässigbar gering bleiben.

Der Anschlag und die in axialer Richtung angrenzende Stirnseite des Axialvorsprungs können einander mit axialem Abstand benachbart zugeordnet sein, wobei der durch den Abstand gebildete Spalt vollständig mit dem Werkstoff der Ummantelung ausgefüllt ist. Eine unmittelbare Berührung zwischen dem Anschlag des Versteifungsrings und der stirnseitigen Begrenzung des Axialvorsprungs wird dadurch verhindert. Die Ummantelung aus schwingungsdämpfendem Werkstoff begünstigt die Reduzierung von in den Sensorring eingeleiteten Schwingungen und bewirkt dadurch verbesserte Gebrauchseigenschaften der Dichtungsanordnung bezüglich der induktiven Erfassung von Drehbewegungen.

Die Ummantelung und der Axialvorsprung können formschlüssig miteinander verbunden sein, wobei die Ummantelung beispielsweise außenseitig ein sich in axialer Richtung erstreckendes, wellenförmiges Profil aufweist. Dazu kann es beispielsweise vorgesehen sein, daß die dem abzudichtenden Raum zugewandte Stirnseite des Axialvorsprungs an dem von der Ummantelung umschlossenen Anschlag unter elastischer Vorspannung anliegt und das wellenförmige Profil mit zumindest einer kongruent geformten Eintiefung im Profil des Innenumfangs des Axialvorsprungs in Eingriff ist. Hierbei ist von Vorteil, daß auch bei nicht eingebauter, vormontierter Einheit, bestehend aus Radialwellendichtring und Sensorring, die Teile unverlierbar aneinandergehalten sind.

Bevorzugt kann es vorgesehen sein, daß die auf der dem Anschlag abgewandten Seite letzte Welle der Ummantelung eine größere Erstreckung in radialer Richtung aufweist, als die in axialer Richtung angrenzenden Wellen, wobei die letzte Welle in einer nutförmigen Vertiefung des Innenumfangs des Axialvorsprungs eingreift. Dabei ist von Vorteil, daß die axial benachbarten Wellen mit dem zylinderförmigen Innendurchmesser des Axialvorsprungs Dichtlabyrinthe bilden, die eine verbesserte Sicherheit gegen einen Flüssigkeitsdurchtritt des abzudichtenden Mediums gewährleisten.

Hinsichtlich einer einfachen Herstellung des Radialwellendichtrings kann es vorgesehen sein, daß die dynamisch beanspruchte Dichtlippe, die Ummantelung und die statisch beanspruchte Dichtung materialeinheitlich und einstückig ineinanderübergehend ausgebildet sind.

Die dem abzudichtenden Raum abgewandten Stirnseiten von Radialwellendichtring und Sensorring können in einer Radialebene angeordnet sein. Hierbei ist von Vorteil, daß die gesamte vormontierbare Einheit auf der dem abzudichtenden Raum abgewandten Seite weitgehend glattflächig gestaltet ist und dadurch die Anlagerung von Verunreinigungen erschwert wird.

Der Radialvorsprung des Sensorrings kann sich nach außen erstrecken. Der Radialwellendichtring kann dadurch problemlos ausgebaut werden, indem beispielsweise zunächst die abzudichtende Achse oder Welle entfernt und der Radialwellendichtring anschließend entgegen der Richtung des abzudichtenden Raums abgezogen wird.

Nach einer anderen Ausgestaltung kann sich der Radialvorsprung des Sensorrings nach innen erstrecken und der Dichtfläche des dynamisch abzudichtenden Bauteils bis auf einen geringen radialen Abstand angenähert sein. Der durch den Abstand gebildete kreisringförmige Spalt kann von kapillareraktiver Enge sein und eine Vorschaltdichtung für die dynamisch beanspruchte Dichtlippe des Radialwellendichtrings bilden. Neben einer verlängerten Gebrauchsdauer des Radialwellendichtrings ist von Vorteil, daß die vormontierbare Einheit besonders kompakte Abmessungen in radiale Richtung aufweist.

Der Sensorring kann aus metallischem Werkstoff bestehen und im wesentlichen scheibenförmig ausgebildet sein, wobei der Radialvorsprung von gleichmäßig in Umfangsrichtung angeordneten Ausnehmungen durchbrochen ist.

Erstreckt sich der Radialvorsprung des Sensorrings nach innen, können die Ausnehmungen vom Werkstoff der Ummantelung vollständig ausgefüllt sein. Hinsichtlich einer exakten induktiven Erfassung von Drehbewegungen ist eine derartige Ausgestaltung von hervorzuhebendem Vorteil. Verunreinigungen können sich nicht in den Ausnehmungen anlagern und dadurch zu Meßfehlern führen. Die vom Werkstoff der Ummantelung vollständig ausgefüllten Ausnehmungen sind insbesondere dann von Vorteil, wenn die beanspruchte Dichtungsanordnung beispielsweise zur Erfassung der Drehbewegung eines Rads von einem Baustellenfahrzeug zur Anwendung gelangt.

Eine einfache Montage des Radialwellendichtrings und des Sensorrings zu der vormontierbaren Einheit wird bevorzugt dadurch bedingt, daß der Radialwellendichtring einschnappbar in den Sensorring gestaltet ist. Bei einem Austausch der Radialwellendichtung wird diese zunächst aus dem noch eingepreßten Sensorring entfernt, wobei der neue Radialwellendichtring in axialer Richtung in den Axialvorsprung des Sensorrings eingeschoben wird, so lange, bis der ummantelte Anschlag hinter der dem abzudichtenden Raum zugewandten Stirnseite des Sensorrings eingeschnappt ist.

Um eine Beschädigung der Ummantelung des Anschlags beim Einschieben des Radialwellendichtrings in den Sensorring zu vermeiden, ist es vorgesehen, daß die Ummantelung in Montagerichtung des Radialwellendichtrings auf der dem abzudichtenden Raum zugewandten Seite radial außenseitig eine Auflaufschräge aufweist. Der Winkel der Auflaufschräge, den diese mit der Rotationsachse der Dichtungsanordnung einschließt, beträgt bevorzugt 45°.

Bevorzugt gelangt die Dichtungsanordnung als Radnabendichtung in einem Kraftfahrzeug zur Anwendung, wobei der Sensorring als ABS-Impulsgeber für die Bremsanlage vorgesehen ist.

Drei Ausführungsbeispiele der erfindungsgemäßen Dichtungsanordnung werden nachfolgend anhand der beigefügten Zeichnungen näher erläutert.

In Fig. 1 ist ein erstes Ausführungsbeispiel einer erfindungsgemäßen Dichtungsanordnung gezeigt, die als Radnabendichtung in einem Kraftfahrzeug zur Anwendung gelangt, wobei die Dichtungsanordnung um das abzudichtende Bauteil, das als Achse ausgebildet ist, rotiert. Die Dichtungsanordnung ist in die relativ drehbewegliche Radnabe eingepreßt.

In Fig. 2 ist ein zweites Ausführungsbeispiel einer Dichtungsanordnung gezeigt, wobei der Radialwellendichtring als Kassettendichtung ausgebildet ist. Die Verwendung der Dichtungsanordnung sowie deren Funktion entspricht im wesentlichen der Dichtungsanordnung aus Fig. 1.

In Fig. 3 ist ein drittes Ausführungsbeispiel einer Dichtungsanordnung gezeigt, bei der sich der Radialvorsprung des Sensorrings nach innen erstreckt und eine luftseitige Vorschaltdichtung für den Radialwellendichtring bildet.

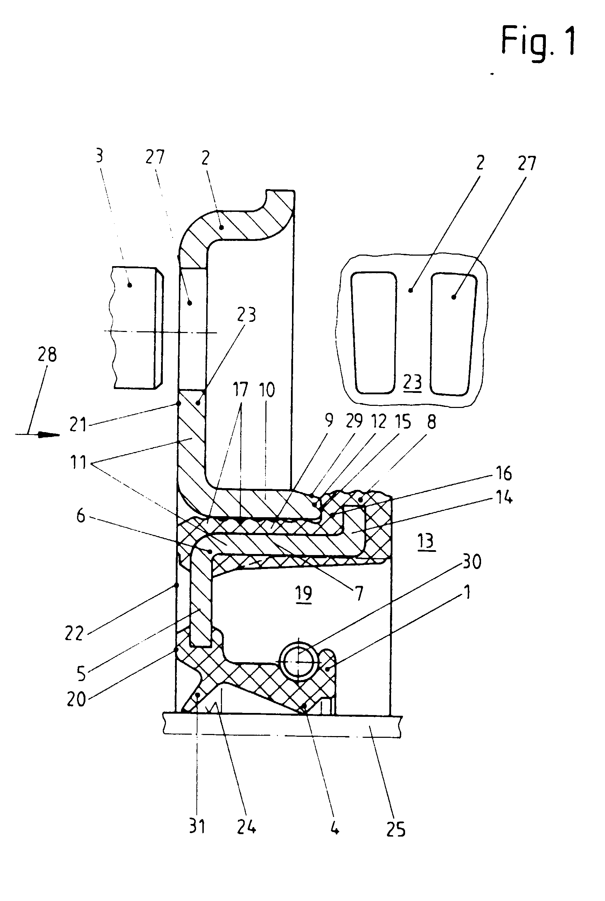

In den Fig. 1 bis 3 ist jeweils eine Dichtungsanordnung gezeigt, die als Radnabendichtung in einem Kraftfahrzeug zur Anwendung gelangt. Die Dichtungsanordnung ist in eine Radnabe eingepreßt, die um eine Achse rotiert. Die Dichtungsanordnung umfaßt einen Wellendichtring 1 und einen als Impulsgeber ausgebildeten Sensorring 2 zur induktiven Erfassung von Drehbewegungen relativ zu einem hier nur schematisch angedeuteten Sensor 3. Der Radialwellendichtring 1 weist eine dynamisch beanspruchte Dichtlippe 4 auf, die die Dichtfläche 24 der abzudichtenden Achse 25 dichtend umschließt. Auf der dem abzudichtenden Raum 19 abgewandten Seite der Dichtlippe 4 ist eine Staublippe 31 angeordnet, um die Dichtlippe 4 vor äußeren Verunreinigungen zu schützen und dadurch eine verlängerte Gebrauchsdauer zu bewirken. In den hier dargestellten Ausführungsbeipielen sind die Radialwellendichtringe 1 jeweils mit einem Versteifungsring 6 aus metallischem Werkstoff versehen, der ein im wesentlichen L-förmiges Profil aufweist. Auf dem abzudichtenden Raum 19 zugewandten Seite des Axialschenkels 7 ist ein Anschlag 14 vorgesehen, der einstückig ineinanderübergehend mit dem Versteifungsring 6 ausgebildet ist und sich in radialer Richtung nach außen erstreckt. Der Axialschenkel 7 des Versteifungsrings 6 ist jeweils vollständig von einer Ummantelung 9 aus elastomerem Werkstoff umschlossen, die in den hier gezeigten Ausführungsbeispielen einen Bestandteil der statisch beanspruchten Dichtung 8 bildet. Der Sensorring 2 ist in den Ausführungsbeispielen gemäß den Fig. 1 bis 3 ebenfalls im wesentlichen L-förmig gestaltet und umschließt mit seinem Axialvorsprung 10 die Ummantelung 9 unter radialer Vorspannung. Der Radialwellendichtring 1 und der Sensorring 2 bilden eine vormontierbare Einheit 11, die bedarfsweise zerstörungsfrei von einander trennbar ist.

In Fig. 1 ist die Ummantelung 9 des Axialschenkels 7 radial außenseitig mit einem wellenförmigen Profil 17 versehen, das im Bereich des Anschlags 14 unter radialer Vorspannung dichtend an einer Begrenzungswandung einer Bohrung eines Gehäuses anliegt.

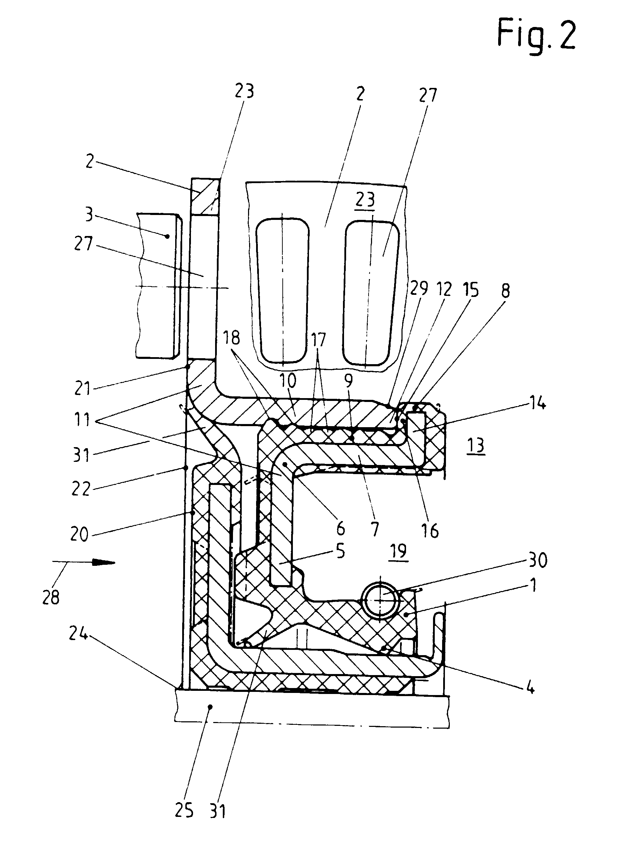

In Fig. 2 ist eine Dichtungsanordnung gezeigt, ähnlich der Dichtungsanordnung aus Fig. 1, wobei der Radialwellendichtring 1 als Kassettendichtung ausgebildet ist. Der auf den Radialwellendichtring 1 aufgepreßte Sensorring 2 wird bei seiner Montage so lange in Richtung des abzudichtenden Raums 10 geschoben, bis seine Stirnseite 15 an der Ummantelung 9 des Anschlags 14 anliegt. Das wellenförmige Profil 17 weist auf der dem abzudichtenden Raum 19 abgewandten Seite eine Welle auf, die in einer kongruent geformten Vertiefung des Sensorrings 2 formschlüssig einschnappbar ist.

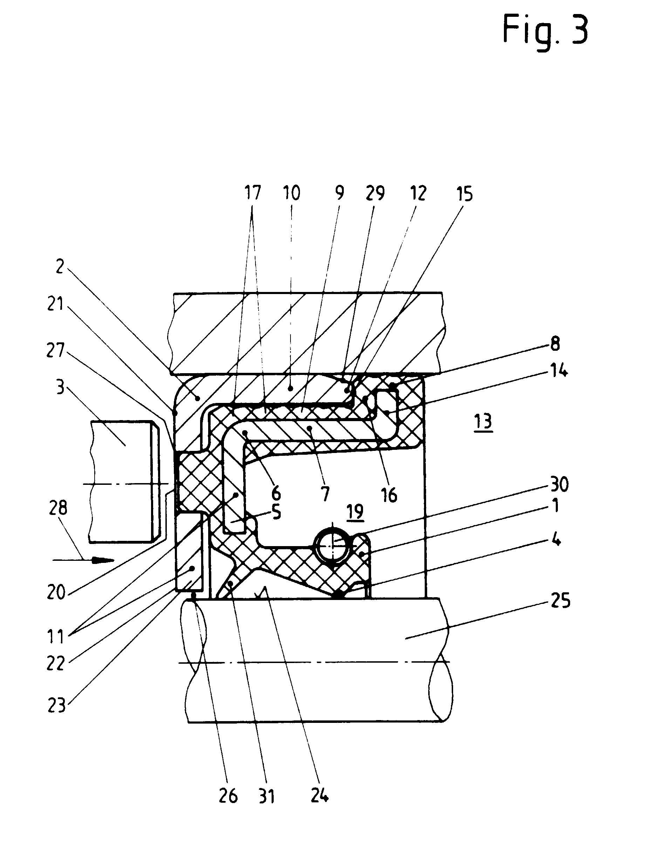

In Fig. 3 erstreckt sich der Radialvorsprung 23 des Sensorrings 2 radial nach innen, wobei er der Dichtfläche 24 des dynamisch abzudichtenden Bauteils 25 bis auf einen geringen radialen Abstand angenähert ist. Der durch das abzudichtende Bauteil 25 und den Radialvorsprung 23 begrenzte kreisringförmige Spalt 26 bildet eine Vorschaltdichtung für den Radialwellendichtring 1. Die Ausnehmungen 27 des Sensorrings 2 sind vom elastomeren Werkstoff der Ummantelung 9 vollständig ausgefüllt um Funktionsbeeinträchtigungen durch Schmutzbeaufschlagung zuverlässig zu vermeiden.

Bei den Ausführungsbeispielen bei den Fig. 1 bis 3 weist die Ummantelung 9 in Montagerichtung 28 des Radialwellendichtrings 1 auf der dem abzudichtenden Raum 19 zugewandten Seite radial außenseitig eine Auflaufschräge 29 auf, die hinter dem Axialvorsprung 10 des Sensorrings 2 einschnappbar ist.

## Patentansprüche

1. Dichtungsvorrichtung, umfassend einen Radialwellendichtring (1) und einen Sensorring (2) zur induktiven Erfassung von Drehbewegungen relativ zu einem Sensor, wobei der Radialwellendichtring zumindest eine dynamisch beanspruchte Dichtlippe (4) aus elastomerem Werkstoff aufweist, die an einem sich in radialer Richtung erstreckenden Radialschenkel (5) eines im wesentlichen L-förmigen Versteifungsrings (6) festgelegt ist, wobei ein sich in axialer Richtung erstreckender Axialschenkel des Versteifungsrings mit einer statisch beanspruchten Dichtung (8) verbunden ist, und wobei der Axialschenkel (7) zumindest radial außenseitig von einer Ummantelung (9) aus elastomerem Werkstoff umschlossen ist, dadurch gekennzeichnet, daß der Sensorring (2) als getrenntes Bauteil ausgebildet ist einen Axialvorsprung (10) aufweist, der die Ummantelung (9) radial außenseitig unter radialer Vorspannung zumindest teilweise umschließt und daß der Radialwellendichtring (1) und der Sensorring (2) eine vormontierbare Einheit (11) bilden sowie bedarfsweise zerstörungsfrei voneinander trennbar sind.

2. Dichtungsvorrichtung nach Anspruch 1, dadurch gekennzeichnet, daß der Axialvorsprung (10) eine geringere Ausdehnung in axialer Richtung aufweist als der Axialschenkel (7).

3. Dichtungsvorrichtung nach Anspruch 1 bis 2, dadurch gekennzeichnet, daß die Ummantelung (9) die Stirnseite (12) des Axialvorsprungs (10) herstellungsbedingt in radialer Richtung überragt.

4. Dichtungsvorrichtung nach Anspruch 1 bis 3, dadurch gekennzeichnet, daß die Ummantelung (9) den Axialschenkel (7) vollständig umschließt.

5. Dichtungsvorrichtung nach Anspruch 1 bis 4, dadurch gekennzeichnet, daß der Axialschenkel (7) auf der dem Radialschenkel (5) abgewandten Seite (13) mit einem einstückig angeformten, sich radial nach außen erstreckenden Anschlag (14) versehen ist.

6. Dichtungsvorrichtung nach Anspruch 5, dadurch gekennzeichnet, daß der Anschlag (14) einen geringeren Außendurchmesser aufweist, als der Axialvorsprung (10) des Sensorrings (2).

7. Dichtungsvorrichtung nach Anspruch 5 bis 6, dadurch gekennzeichnet, daß die Ummantelung (9) den Anschlag (14) radial außenseitig umschließt.

8. Dichtungsvorrichtung nach Anspruch 5 bis 7, dadurch gekennzeichnet, daß der Anschlag (14) und die in axialer Richtung angrenzende Stirnseite (15) des Axialvorsprungs (10) einander mit axialem Abstand benachbart zugeordnet sind und daß der durch den Abstand gebildete Spalt (16) vollständig mit dem Werkstoff der Ummantelung (9) ausgefüllt ist.

9. Dichtungsvorrichtung nach Anspruch 1 bis 8, dadurch gekennzeichnet, daß die Ummantelung (9) und der Axialvorsprung (10) formschlüssig miteinander verbunden sind.

10. Dichtungsvorrichtung nach Anspruch 9, dadurch gekennzeichnet, daß die Ummantelung (9) außenseitig ein sich in axialer Richtung erstreckendes, wellenförmiges Profil (17) aufweist.

11. Dichtungsvorrichtung nach Anspruch 10, dadurch gekennzeichnet, daß das wellenförmige Profil (17) mit einem kongruent geformten Profil (18) des Innenumfangs des Axialvorsprungs (10) in Eingriff ist.

12. Dichtungsvorrichtung nach Anspruch 1 bis 11, dadurch gekennzeichnet, daß die dynamisch beanspruchte Dichtlippe (4), die Ummantelung (9) und die statisch beanspruchte Dichtung (8) materialeinheitlich und einstückig ineinanderübergehend ausgebildet sind.

13. Dichtungsvorrichtung nach Anspruch 1 bis 12, dadurch gekennzeichnet, daß die dem abzudichtenden Raum (19) abgewandten Stirnseiten (20, 21) von Radialwellendichtring (1) und Sensorring (2) in einer Radialebene (22) angeordnet sind.

14. Dichtungsvorrichtung nach Anspruch 1 bis 13, dadurch gekennzeichnet, daß sich ein Radialvorsprung (23) des Sensorring (2) nach außen erstreckt.

15. Dichtungsvorrichtung nach Anspruch 1 bis 13, dadurch gekennzeichnet, daß sich der Radialvorsprung (23) des Sensorrings (2) nach innen erstreckt und der Dichtfläche (24) des dynamisch abzudichtenden Bauteils (25) bis einen geringen radialen Abstand angenähert ist.

16. Dichtungsvorrichtung nach Anspruch 15, dadurch gekennzeichnet, daß der durch den Abstand gebildete kreisringförmige Spalt (26) von kapillaraktiver Enge ist und eine Vorschaltdichtung für den Radialwellendichtring (1) bildet.

17. Dichtungsvorrichtung nach Anspruch 1 bis 16, dadurch gekennzeichnet, daß der Sensorring (2) aus metallischem Werkstoff besteht und im wesentlichen scheibenförmig ausgebildet ist und daß der Radialvorsprung (23) von gleichmäßig in Umfangsrichtung angeordneten Ausnehmungen (27) durchbrochen ist.

18. Dichtungsvorrichtung nach Anspruch 15 bis 17, dadurch gekennzeichnet, daß die Ausnehmungen (27) vom Werkstoff der Ummantelung (9) vollständig ausgefüllt sind.

19. Dichtungsvorrichtung nach Anspruch 1 bis 18, dadurch gekennzeichnet, daß der Radialwellendichtring (1) einschnappbar in den Sensorring (2) gestaltet ist.

20. Dichtungsvorrichtung nach Anspruch 19, dadurch gekennzeichnet, daß der Radialwellendichtring (1) mit seiner Ummantelung (9) hinter dem Axialvorsprung (10) des Sensorrings (2) einschnappbar ist und diesen in radialer Richtung überragt.

21. Dichtungsvorrichtung nach Anspruch 19 bis 20, dadurch gekennzeichnet, daß die Ummantelung (9) in Montagerichtung (28) des Radialwellendichtrings (1) auf der dem abzudichtenden Raum (19) zugewandten Seite radial außenseitig eine Auflaufschräge (29) aufweist.

22. Dichtungsvorrichtung nach Anspruch 1 bis 21, gekennzeichnet durch die Verwendung als Radnabendichtung in einem Kraftfahrzeug.

## Claims

1. A sealing device comprising a radial shaft seal (1) and a sensor ring (2) for inductively sensing rotary movements relative to a sensor, it being the case that the radial shaft seal has at least one dynamically stressed sealing lip (4) which is made of elastomeric material and is secured on a radial leg (5), which extends in the radial direction, of an essentially L-shaped stiffening ring (6), it being the case that an axial leg, which extends in the axial direction, of the stiffening ring is connected to a statically stressed seal (8), and it being the case that the axial leg (7) is enclosed at least on the outside in the radial direction by a sheathing (9) made of elastomeric material, characterized in that the sensor ring (2) is designed as a separate component, and has an axial protrusion (10) which, with radial prestressing, at least partially encloses the sheathing (9) on the outside in the radial direction, and in that the radial shaft seal (1) and the sensor ring (2) form a unit (11) which can be preassembled, and if required can be separated from one another without being destroyed.

2. A sealing device according to claim 1, characterized in that the axial protrusion (10) has a smaller extent in the axial direction than the axial leg (7).

3. A sealing device according to either of claims 1 and 2, characterized in that production causes the sheathing (9) to project beyond the end side (12) of the axial protrusion (10) in the radial direction.

4. A sealing device according to any of claims 1 to 3, characterized in that the sheathing (9) fully encloses the axial leg (7).

5. A sealing device according to any of claims 1 to 4, characterized in that on the side (13), which is directed away from the radial leg (5), the axial leg (7) is provided with an integrally formed, radially outwardly extending stop (14).

6. A sealing device according to claim 5, characterized in that the stop (14) has a smaller external diameter than the axial protrusion (10) of the sensor ring (2).

7. A sealing device according to either of claims 5 and 6, characterized in that the sheathing (9) encloses the stop (14) on the outside in the radial direction.

8. A sealing device according to any of claims 5 to 7, characterized in that the stop (14) and the axially neighbouring end side (12) of the axial protrusion (10) are arranged adjacent to one another at an axial distance apart, and in that the gap (16), which is formed by said distance, is completely filled with the material of the sheathing (9).

9. A sealing device according to any of claims 1 to 8, characterized in that the sheathing (9) and the axial protrusion (10) are connected to one another in a positively locking manner.

10. A sealing device according to claim 9, characterized in that, on the outside, the sheathing (9) has an axially extending, undulating profile (17).

11. A sealing device according to claim 10, characterized in that the undulating profile (17) engages with a congruent profile (18) of the inner circumference of the axial protrusion (10).

12. A sealing device according to any of claims 1 to 11, characterized in that the dynamically stressed sealing lip (4), the sheathing (9) and the statically stressed seal (8) are designed integrally with one another of uniform material.

13. A sealing device according to any of claims 1 to 12, characterized in that the end sides (20, 21) of the radial shaft seal (1) and sensor ring (2), said end sides being directed away from the space (19) which is to be sealed, are arranged in one radial plane (22).

14. A sealing device according to any of claims 1 to 13, characterized in that a radial protrusion (23) of the sensor ring (2) extends outwards.

15. A sealing device according to any of claims 1 to 13, characterized in that the radial protrusion (23) of the sensor ring (2) extends inwards and is spaced apart by just a small radial distance from the sealing surface (24) of the component (25) which is to be sealed dynamically.

16. A sealing device according to claim 15, characterized in that the annular gap (26), which is formed by said distance, is narrow enough to have capillary action and forms an auxiliary seal for the radial shaft seal (1).

17. A sealing device according to any of claims 1 to 16, characterized in that the sensor ring (2) consists of metallic material and is designed essentially in the form of a disc, and in that the radial protrusion (23) has recesses (27), which are arranged uniformly in the circumferential direction, passing through it.

18. A sealing device according to any of claims 15 to 17, characterized in that the recesses (27) are completely filled by the material of the sheathing (9).

19. A sealing device according to any of claims 1 to 18, characterized in that the radial shaft seal (1) is configured such that it can be snapped into the sensor ring (2).

20. A sealing device according to claim 19, characterized in that the radial shaft seal (1), by way of its sheathing (9), can be snapped in behind the axial protrusion (10) of the sensor ring (2) and projects beyond the same in the radial direction.

21. A sealing device according to either of claims 19 and 20, characterized in that in the installation direction (28) of the radial shaft seal (1), on the side which is directed towards the space (19) which is to be sealed, the sheathing (9) has a run-on slope (29) on the outside in the radial direction.

22. A sealing device according to any of claims 1 to 21, characterized by the use as a wheel-hub seal in a motor vehicle.

## Revendications

1. Dispositif de joint d'étanchéité, comprenant un joint à lèvre radiale (1) et un anneau de capteur (2) servant à la saisie inductive de mouvements de rotation par rapport à un capteur, le joint à lèvre radiale comprenant au moins une lèvre d'étanchéité (4) en élastomère soumise à des efforts dynamiques, qui est fixée sur une branche radiale (5), s'étendant dans la direction radiale, d'une bague de renfort (6) ayant essentiellement une forme en L, une branche axiale de la bague de renfort s'étendant dans la direction axiale étant reliée à une garniture d'étanchéité (8) soumise à des efforts statiques et la branche axiale (7) étant entourée, au moins sur le côté extérieur dans le sens radial, par une enveloppe (9) en élastomère, caractérisé en ce que l'anneau de capteur (2) est exécuté en tant qu'élément de construction séparé et comprend une saillie axiale (10) qui entoure l'enveloppe (9), au moins partiellement, sur le côté extérieur dans le sens radial, sous l'effet d'une précontrainte radiale, et en ce que le joint à lèvre radiale (1) et l'anneau de capteur (2) forment une unité pouvant faire l'objet d'un montage préalable et peuvent être séparés l'un de l'autre, en cas de besoin, sans destruction.

2. Dispositif de joint d'étanchéité selon la revendication 1, caractérisé en ce que la saillie axiale (10) a une étendue dans la direction axiale qui est inférieure à celle de la branche axiale (7).

3. Dispositif de joint d'étanchéité selon l'une des revendications 1 à 2, caractérisé en ce que, pour des raisons de fabrication, l'enveloppe (9) dépasse le côté frontal (12) de la saillie axiale (10) dans la direction radiale.

4. Dispositif de joint d'étanchéité selon l'une des revendications 1 à 3, caractérisé en ce que l'enveloppe (9) entoure complètement la branche axiale (7).

5. Dispositif de joint d'étanchéité selon l'une des revendications 1 à 4, caractérisé en ce que la branche axiale (7) est pourvue, sur le côté (13) éloigné de la branche radiale (5), d'une butée (14) solidaire avec elle s'étendant radialement vers l'extérieur.

6. Dispositif de joint d'étanchéité selon la revendication 5, caractérisé en ce que la butée (14) a un diamètre extérieur inférieur à la saillie axiale (10) de l'anneau de capteur (2).

7. Dispositif de joint d'étanchéité selon l'une des revendications 5 à 6, caractérisé en ce que l'enveloppe (9) entoure la butée (14) sur le côté extérieur dans le sens radial.

8. Dispositif de joint d'étanchéité selon l'une des revendications 5 à 7, caractérisé en ce que la butée (14) et le côté frontal (15) de la saillie axiale (10), qui lui est contigu dans la direction axiale, sont voisins, situés à une distance axiale l'un de l'autre, et en ce que la fente (16) formée par la distance est complètement remplie par le matériau de l'enveloppe (9).

9. Dispositif de joint d'étanchéité selon l'une des revendications 1 à 8, caractérisé en ce que l'enveloppe (9) et la saillie axiale (10) sont reliées l'une à l'autre par conjugaison de forme.

10. Dispositif de joint d'étanchéité selon la revendication 9, caractérisé en ce que l'enveloppe (9) est pourvue, sur le côté extérieur, d'un profil ondulé (17) s'étendant dans la direction axiale.

11. Dispositif de joint d'étanchéité selon la revendication 10, caractérisé en ce que le profil ondulé (17) est en contact avec un profil (18) de forme congruente de la circonférence interne de la saillie axiale (10).

12. Dispositif de joint d'étanchéité selon l'une des revendications 1 à 11, caractérisé en ce que la lèvre d'étanchéité (4) soumise à des efforts dynamiques, l'enveloppe (9) et la garniture d'étanchéité (8) soumise à des efforts statiques sont exécutées dans le même matériau et de manière à se confondre.

13. Dispositif de joint d'étanchéité selon l'une des revendications 1 à 12, caractérisé en ce que les côtés frontaux (20, 21) du joint à lèvre radiale (1) et de l'anneau de capteur (2) éloignés de l'espace (19) à rendre étanche sont situés dans un plan radial (22).

14. Dispositif de joint d'étanchéité selon l'une des revendications 1 à 13, caractérisé en ce qu'une saillie radiale (23) de l'anneau de capteur (2) s'étend vers l'extérieur.

15. Dispositif de joint d'étanchéité selon l'une des revendications 1 à 13, caractérisé en ce que la saillie radiale (23) de l'anneau de capteur (2) s'étend vers l'intérieur et s'approche à une petite distance radiale de la surface d'étanchéité (24) de l'élément de construction (25) à rendre étanche de manière dynamique.

16. Dispositif de joint d'étanchéité selon la revendication 15, caractérisé en ce que la fente (26) en forme de couronne formée par la distance a une étroitesse qui lui confère une action capillaire et forme une garniture d'étanchéité en série pour le joint à lèvre radiale (1).

17. Dispositif de joint d'étanchéité selon l'une des revendications 1 à 16, caractérisé en ce que l'anneau de capteur (2) est formé d'un matériau métallique et exécuté de manière à avoir essentiellement la forme d'un disque, et en ce que la saillie radiale (23) est percée d'évidements (27) répartis uniformément dans la direction circonférentielle.

18. Dispositif de joint d'étanchéité selon l'une des revendications 15 à 17, caractérisé en ce que les évidements (27) sont complètement remplis par le matériau de l'enveloppe (9).

19. Dispositif de joint d'étanchéité selon l'une des revendications 1 à 18, caractérisé en ce que le joint à lèvre radiale (1) a une forme lui permettant de s'emboîter dans l'anneau de capteur (2).

20. Dispositif de joint d'étanchéité selon la revendication 19, caractérisé en ce que le joint à lèvre radiale (1) peut être emboîté, avec son enveloppe (9), derrière la saillie axiale (10) de l'anneau de capteur (2) et dépasse celle-ci dans la direction radiale.

21. Dispositif de joint d'étanchéité selon l'une des revendications 19 à 20, caractérisé en ce que l'enveloppe (9) est pourvue, sur le côté extérieur dans le sens radial tourné vers l'espace (19) à rendre étanche, d'une surface inclinée de réception (29), dans la direction de montage (28) du joint à lèvre radiale (1).

22. Dispositif de joint d'étanchéité selon l'une des revendications 1 à 21, caractérisé par l'utilisation en tant que joint d'étanchéité pour moyeu de roue dans un véhicule automobile.
